# EUROPÄISCHE PATENTSCHRIFT

(11) **EP 2 872 367 B1**
(45) Veröffentlichungstag und Bekanntmachung des Hinweises auf die Patenterteilung: **29.08.2018**
(21) Anmeldenummer: 13723019.9
(22) Anmeldetag: 24.04.2013
(51) Int. Cl.: B60T 7/12, B60T 8/17, B60T 8/171, B60T 8/172, B60T 8/175, B60T 8/1755, B60T 8/24, B60T 8/26, B60T 8/32, B60W 10/06, B60W 30/18

(54) **VERFAHREN ZUR STABILISIERUNG EINES ZWEIRADS BEI KURVENFAHRT**
METHOD FOR STABILIZING A TWO-WHEELED VEHICLE WHEN CORNERING
PROCÉDÉ DE STABILISATION D'UN DEUX ROUES EN CONDUITE EN VIRAGE

(30) Priorität: 10.07.2012 DE 102012211963
(43) Veröffentlichungstag der Anmeldung: 20.05.2015
(73) Patentinhaber: Robert Bosch GmbH, 70442 Stuttgart (DE)
(72) Erfinder: MOERBE, Matthias, 74360 Ilsfeld-Helfenberg (DE)
(86) Internationale Anmeldenummer: PCT/EP2013/058445
(87) Internationale Veröffentlichungsnummer: WO 2014/009033

(56) Entgegenhaltungen:
- EP-A1- 2 460 703
- EP-A2- 1 488 974
- WO-A1-2006/077211
- DE-A1- 10 235 378
- DE-A1-102007 061 114
- DE-A1-102008 001 970
- DE-A1-102010 003 951
- GB-A- 2 454 339

## Beschreibung

Die Erfindung bezieht sich auf ein Verfahren zur Stabilisierung eines Zweirads bei Kurvenfahrt nach dem Oberbegriff des Anspruches 1, und auf ein Regel- bzw. Steuergerät das das Verfahren durchführt, laut Anspruch 6.

### Stand der Technik

Um mit einem Motorrad eine Kurve stabil durchfahren zu können, müssen die Motorradgeschwindigkeit, die Schräglage und der Lenkwinkel an den aktuellen Kurvenradius angepasst sein. Eine nicht angepasste Geschwindigkeit oder ein falscher Lenkwinkel kann zu einer kritischen Fahrsituation führen, bei der das Motorrad über- oder untersteuert, also das Hinterrad zu Driften beginnt bzw. das Vorderrad über die Kurve hinausschiebt. Derartige Situationen besitzen ein hohes Gefahrenpotenzial.

Die DE 10 2008 001 970 A1 offenbart ein Verfahren zum Stabilisieren eines Zweirades, indem ein kritischer Fahrzustand aus Messgrößen bestimmt wird, wobei zur Stabilisierung des Zweirades ein Momenteneingriff durch Betätigung der Bremse bzw. des Antriebsmotors - Hinzuführen oder Zurücknehmen von Gas - durchgeführt wird. Als Messgrößen werden mithilfe von Sensoren der Neigungswinkel des Zweirads sowie der Schwimmwinkel ermittelt. Es wird ein Wegdriften des Hinterrades, also ein Übersteuern detektiert und durch stabilisierende Maßnahmen ausgeglichen.

Auch die DE 10 2010 003 951 A1 offenbart ein Verfahren zum Stabilisieren eines Zweirads bei seitlich rutschendem Hinterrad, das mithilfe eines Querbeschleunigungssensors, eines Gierratensensors und eines Wank- und Nickwinkelsensors erkannt wird. Hieraus wird der aktuelle Schwimmwinkel bestimmt, wobei eine Hinterrad-Instabilität vorliegt, wenn der Schwimmwinkel einen Schwellenwert übersteigt. Daraufhin erfolgt ein Momenteneingriff am Vorderrad oder am Hinterrad.

### Offenbarung der Erfindung

Der Erfindung liegt die Aufgabe zugrunde, ein Zweirad bei Kurvenfahrt selbsttätig zu stabilisieren.

Diese Aufgabe wird erfindungsgemäß mit den Merkmalen des Anspruches 1 gelöst. Die Unteransprüche geben zweckmäßige Weiterbildungen an.

Mit dem erfindungsgemäßen Verfahren kann ein Zweirad stabilisiert werden, insbesondere ein Motorrad oder ein sonstiges, motorbetriebenes Zweirad, das sich in einer Kurvenfahrt befindet und einem kritischen Fahrzustand nähert. Derartige kritische Fahrzustände treten bei Kurvenfahrten auf, wenn die aktuelle Fahrzeuggeschwindigkeit, der Lenkwinkel und/oder die Schräglage des Zweirads mit dem Kurvenradius nicht zusammenpassen. Insbesondere bei einer Abweichung
des aktuellen Lenkwinkels von einem Soll-Lenkwinkel kann ein Untersteuern oder Übersteuern des Zweirades auftreten. Bei einem Übersteuern driftet das Hinterrad des Zweirads und beginnt, sich von der Ideallinie mit einer radialen Komponente nach außen zu bewegen, wohingegen bei einem Untersteuern das Vorderrad mit radialer Komponente nach außen schiebt.

Bei dem erfindungsgemäßen Verfahren kann mittels einer Sensorik im Zweirad ein drohender bzw. bereits eingetretener kritischer Fahrzustand detektiert werden, wobei über die Sensorik aktuelle Fahrzeugzustandsgrößen gemessen werden. Über die Sensorik wird auch der aktuelle Lenkwinkel bestimmt, der für die Unterscheidung zwischen Driften des Hinterrades und Untersteuern des Vorderrades herangezogen wird. Es ist somit möglich, unter Berücksichtigung des aktuellen Lenkwinkels auf die Art der drohenden bzw. eingetretenen Fahrzeuginstabilität zu schließen, woraufhin entsprechende Maßnahmen zur Fahrzeugstabilisierung getroffen werden können. Bei diesen Maßnahmen handelt es sich um ein Ändern des am Vorderrad und/oder Hinterrad anliegenden Momentes, wobei am Hinterrad das Motormoment und/oder Bremsmoment und am Vorderrad das Bremsmoment eingestellt bzw. modifiziert werden kann. Die Einstellung erfolgt selbsttätig über Stellsignale eines Regel- bzw. Steuergerätes im Fahrzeug, über die eine Aktorik im Motor bzw. den Radbremsen zum Erzielen des gewünschten Momentes eingestellt wird.

Über die Sensorik werden, zusätzlich zum aktuellen Lenkwinkel, vorteilhafterweise Beschleunigungswerte des Zweirades ermittelt, wobei zumindest translatorische Beschleunigungen in allen drei Raumrichtungen, gegebenenfalls zusätzlich rotatorische Beschleunigungen um alle drei Raumachsen ermittelt werden. Eine derartige Sensorik ist gegebenenfalls Bestandteil einer im Fahrzeug bereits vorhandenen Antriebsschlupfregelung bzw. eines sonstigen Fahrerassistenzsystems, so dass die Sensorik ergänzend für das erfindungsgemäße Verfahren mit verwendet werden kann. Der Lenkwinkel wird ebenfalls über eine im Fahrzeug vorhandene Sensorik detektiert.

Aus den gemessenen Zustandsgrößen, insbesondere den Beschleunigungswerten, kann zweckmäßigerweise der sich anbahnende, kritische Fahrzustand mit einer Vorlaufzeit von beispielsweise einigen Sekunden ermittelt werden, so dass bereits vor dem Eintreten des kritischen Zustandes über die Erzeugung von Stellsignalen stabilisierende Maßnahmen bzw. den kritischen Zustand verhindernde Maßnahmen getroffen werden können.

Gemäß eines weiteren Aspektes der Erfindung wird ein Soll-Lenkwinkel ermittelt, mit dem das Zweirad unter optimalen Bedingungen, also im stabilen Fahrzustand, durch die Kurve fährt. Über einen Vergleich zwischen dem aktuellen Lenkwinkel und dem Soll-Lenkwinkel kann auf den kritischen Fahrzustand entweder am Vorderrad oder am Hinterrad geschlossen werden. Je nach Abweichung des aktuellen Lenkwinkels in positiver oder negativer Richtung vom Soll-Lenkwinkel betrifft der kritische Fahrzustand das Hinterrad oder das Vorderrad, woraufhin eine angepasste, stabilisierende Maßnahme getroffen wird, bei der das Moment am Vorderrad und/oder am Hinterrad beeinflusst wird. Üblicherweise unterscheiden sich die stabilisierenden Maßnahmen, je nachdem, ob das Hinterrad driftet oder das Vorderrad untersteuert.

Der Soll-Lenkwinkel wird beispielsweise aus der aktuellen Schräglage des Zweirades und der aktuellen Fahrzeuggeschwindigkeit ermittelt. Die Fahrzeuggeschwindigkeit ist aus sensorischen Daten bekannt, die Schräglage kann beispielsweise aus gemessenen Beschleunigungswerten errechnet.

Beim Driften des Hinterrades bzw. des gesamten Zweirades weicht die Zweiradlängsachse von der aktuellen Tangente an die Kurvenbahn ab. Über die stabilisierenden Maßnahmen, also die Beeinflussung des Momentes am Hinterrad und/oder am Vorderrad, kann das Driften auf ein zulässiges Maß zurückgeführt werden. Hierbei kann es zweckmäßig sein, eine maximal zulässige Driftwinkeltoleranz in Form einer erlaubten Winkeldifferenz in positiver und negativer Richtung zuzulassen, wobei die Driftwinkeltoleranz werksseitig, gegebenenfalls aber auch vom Fahrer einzustellen ist. Über die Driftwinkeltoleranz wird auf das Fahrverhalten des Zweirades Einfluss genommen, wobei eine größere Driftwinkeltoleranz einem sportlicheren Fahrverhalten entspricht.

Über die Momentenbeeinflussung am Vorderrad und/oder Hinterrad wird zweckmäßigerweise zur Stabilisierung des Fahrzeugs die Fahrzeuggeschwindigkeit verringert. Grundsätzlich möglich ist aber auch, durch Rücknahme eines aktuell anliegenden Bremsmomentes bzw. Erhöhung des Motormomentes die Geschwindigkeit zu erhöhen.

Das Verfahren läuft in dem Regel- bzw. Steuergerät ab, in welchem die Messsignale der Sensorik ausgewertet werden und gemäß einer hinterlegten Logik festgestellt wird, ob bei der Kurvenfahrt eine kritische Fahrsituation vorliegt bzw. sich anbahnt. Sofern dies der Fall ist, werden Stellsignale erzeugt, um in der vorbeschriebenen Weise die aktuell anliegenden Momente am Vorderrad und/oder am Hinterrad zu modifizieren. Das Regel- bzw. Steuergerät ist hierbei zweckmäßigerweise Bestandteil eines Fahrerassistenzsystems zur Fahrdynamikregelung.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung ein Motorrad in Kurvenfahrt mit untersteuerndem Vorderrad,
- Fig. 2: eine Fig. 1 entsprechende Darstellung, jedoch mit driftendem Hinterrad,
- Fig. 3: ein Blockschaltdiagramm zur Stabilisierung des Zweirads bei Kurvenfahrt,
- Fig. 4: eine Blockschaltdarstellung mit den Eingangs- und Ausgangsgrößen einer Momentenregelung, welche zur Stabilisierung des Zweirads bei Kurvenfahrt eingesetzt wird.

In den Figuren sind gleiche Bauteile mit gleichen Bezugszeichen versehen.

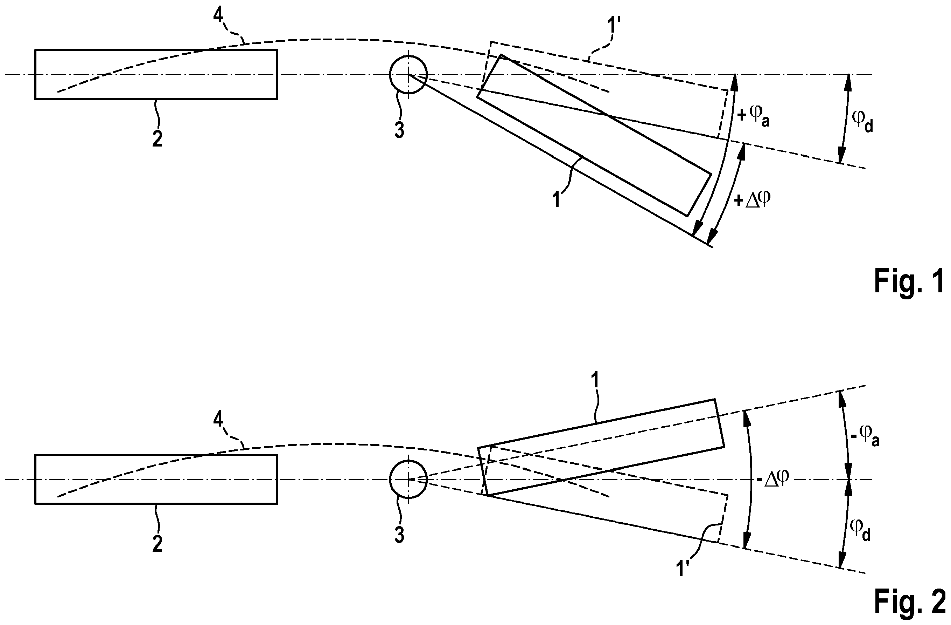

In den Fig. 1 und 2 ist stark schematisiert ein Zweirad bei Kurvenfahrt dargestellt, das ein Vorderrad 1 und ein Hinterrad 2 aufweist, wobei das Vorderrad 1 um eine Lenkachse 3 mit dem aktuellen Lenkwinkel Δϕₐ verstellt wird. In Fig. 1 untersteuert das Fahrzeug, dementsprechend ist der aktuelle Lenkwinkel Δϕₐ positiv. In Fig. 2 übersteuert das Fahrzeug, der aktuelle Lenkwinkel ϕₐ ist negativ. In beiden Fig. 1 und 2 ist der Soll-Lenkwinkel, welcher die ideale Position des Vorderrades auf der Kurvenbahn 4 darstellt, mit ϕ_{d} bezeichnet. Die ideale Sollposition des Vorderrades ist gestrichelt eingetragen und mit dem Bezugszeichen 1' gekennzeichnet. Die Lenkwinkeldifferenz Δϕ ergibt sich aus der Differenz von aktuellem Lenkwinkel ϕₐ und Soll-Lenkwinkel ϕ_{d}. Beim Untersteuern gemäß Fig. 1 ist die Lenkwinkeldifferenz Δϕ positiv, beim Übersteuern gemäß Fig. 2 negativ.

Da das Zweirad sich auf einer Kurvenbahn 4 bewegt, weist das Zweirad auch eine Schräglage auf. Im Idealfall gehört zu einem gegebenen Kurvenradius und einer bestimmten Fahrzeuggeschwindigkeit ein definierter Wert für die Schräglage sowie für den Lenkwinkel. Bei einer Abweichung des aktuellen Lenkwinkels ϕₐ vom Soll-Lenkwinkel ϕ_{d} gerät das Zweirad ins Untersteuern bzw. Übersteuern, so dass sich eine Lenkwinkeldifferenz Δϕ ungleich null einstellt. Um das Untersteuern bzw. Übersteuern zu kompensieren, kann am Vorderrad 1 und/oder am Hinterrad 2 das aktuell anliegende Moment selbsttätig beeinflusst werden. Im Bereich des Vorderrades kann das aktuell anliegende Bremsmoment modifiziert werden, im Bereich des Hinterrades über einen Eingriff in das Motormanagement das antreibende Moment oder über einen Eingriff in die Hinterradbremse das Bremsmoment. Die Modifizierung der Momente erfolgt über Stellsignale eines Regel- bzw. Steuergeräts, welches im Zweirad mitgeführt wird und in dem aus Eingangssignalen Stellsignale erzeugt werden, über die Aktoren im Motor bzw. in den Radbremsen am Vorder- oder Hinterrad eingestellt werden.

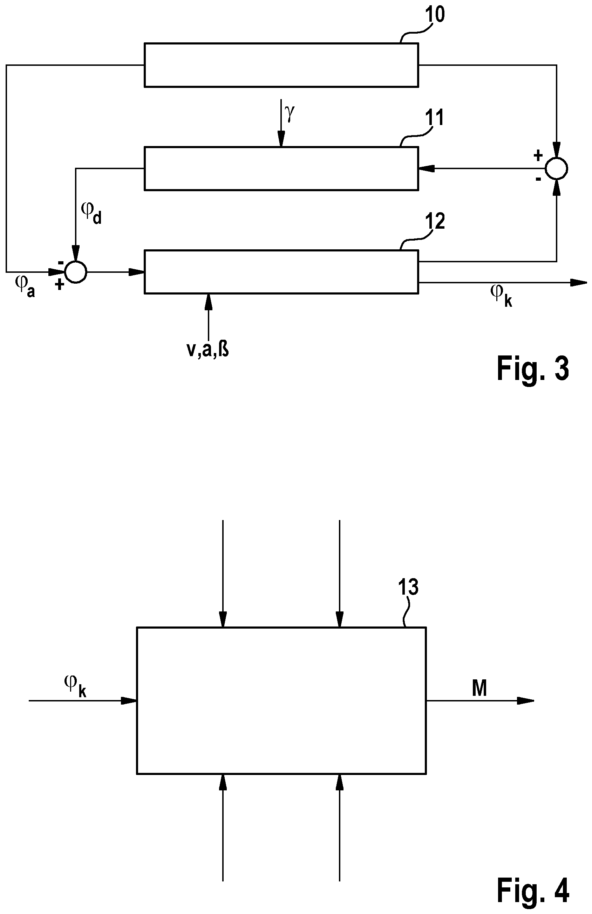

Fig. 3 zeigt ein Blockschaltbild mit dem grundsätzlichen Ablauf der Regelung zur Stabilisierung des Zweirads bei Kurvenfahrt. Ein erster Block 10 repräsentiert die Sensorik im Fahrzeug, welche beispielsweise Bestandteil einer im Zweirad verbauten Antriebsschlupfregelung sein kann und über die als Fahrzeugzustandsgrößen die translatorischen und rotatorischen Beschleunigungen in allen drei Raumrichtungen ermittelbar sind. Darüber hinaus sind die Fahrzeuggeschwindigkeit sowie die Radgeschwindigkeiten am Vorderrad und Hinterrad zu detektieren. Des Weiteren ist das Fahrzeug mit einer Sensorik zur Ermittlung des aktuellen Lenkwinkels ϕₐ ausgestattet.

Ein weiterer Block 11 repräsentiert einen Beobachter, der ausgangsseitig einen Soll-Lenkwinkel ϕ_{d} liefert, welcher vom aktuellen Lenkwinkel ϕₐ subtrahiert wird, um die Lenkwinkeldifferenz Δϕ zu ermitteln. Die Lenkwinkeldifferenz Δϕ wird als Eingangsgröße einem Block 12 zugeführt, der ein Fahrzeugmodell repräsentiert, dem zusätzlich als Eingangsgrößen die Messsignale zugeführt werden können, beispielsweise die Fahrzeuggeschwindigkeit v, Beschleunigungen a, insbesondere die Längsbeschleunigung und die Querbeschleunigung des Fahrzeugs sowie die Schräglage β, welche vorteilhafterweise nicht gemessen wird, sondern aus Messgrößen ermittelt werden kann.

In dem Fahrzeugmodell 12 wird aus der Lenkwinkeldifferenz Δϕ einschließlich des Vorzeichens der Lenkwinkeldifferenz, aus dem auf ein Driften am Hinterrad bzw. Untersteuern am Vorderrad geschlossen werden kann, eine Lenkwinkel-Regelgröße ϕₖ generiert, die, wie in Fig. 4 dargestellt, einen Momentenregler als Eingangsgröße zugeführt wird. Im Fahrzeugmodell 12 werden außerdem als Ausgangsgröße Sollwerte erzeugt, die von korrespondierenden Istwerten subtrahiert werden, welche vom Block 10 stammen. Die Differenz wird als Eingangsgröße dem Beobachter 11 zugeführt. Bei den Soll- und Ist-Größen handelt es sich insbesondere um die Fahrzeuggeschwindigkeit, die Schräglage und den Lenkwinkel.

Außerdem kann dem Beobachter 11 eine Driftwinkeltoleranz γ als Eingangsgröße zugeführt werden, die bei der Berechnung des Soll-Lenkwinkels ϕ_{d} berücksichtigt wird. Über die Driftwinkeltoleranz ϕ_{d} kann ein Driftwinkel, also die Abweichung der Fahrzeuglängsachse von der Ideallinie, zugelassen werden, beispielsweise in absoluten Zahlen 1° oder 3° in beide Richtungen. Über die Driftwinkeltoleranz γ kann das Fahrverhalten beeinflusst werden, wobei mit zunehmender Driftwinkeltoleranz ein sportlicheres Verhalten eingestellt wird.

Fig. 4 zeigt den Momentenregler 13 zur Einstellung der Momente M am Vorderrad bzw. Hinterrad. Dem Momentenregler 13 wird als Eingangsgröße die Lenkwinkel-Korrekturgröße ϕₖ zugeführt, die im Block 12 (Fig. 3) berechnet worden ist. Als weitere Eingangsgrößen können Korrekturgrößen für die Schräglage, die Driftwinkeltoleranz, Korrekturgrößen für Beschleunigungen und Geschwindigkeiten sowie gegebenenfalls ein vom Fahrer einzustellender Fahrmodus, beispielsweise eine sportliche oder bequeme Fahrweise berücksichtigt werden. Außerdem kann ein zulässiger Driftwinkel vorgewählt werden, der ebenfalls als Eingangsgröße berücksichtigt wird.

Die Ausgangsgröße M ist ein Stellsignal, das einem Aktor im Antriebsmotor des Zweirades oder in einer der Radbremsen am Vorderrad bzw. Hinterrad zur Einstellung zugeführt wird. Der Momentenregler 13 ist zweckmäßigerweise in einem Regel- bzw. Steuergerät realisiert, in welchem auch der Beobachter 11 und das Fahrzeugmodell 12 aus Fig. 3 enthalten sein können.

## Patentansprüche

1. Verfahren zur Stabilisierung eines Zweirads bei Kurvenfahrt, bei dem der aktuelle Fahrzustand detektiert und in Abhängigkeit des Fahrzustands mindestens ein Fahrzeugrad abgebremst oder beschleunigt wird, **dadurch gekennzeichnet, dass** anhand von Messwerten einschließlich des aktuellen Lenkwinkels (ϕₐ) auf ein Driften des Hinterrades (2) bzw. ein Untersteuern des Vorderrades (1) geschlossen und das Zweirad durch Ändern des Moments am Vorderrad (1) und/oder Hinterrad (2) stabilisiert wird, wobei aus der Schräglage (β), die aus gemessenen Beschleunigungswerten ermittelt wird, und der Fahrzeuggeschwindigkeit (v) ein Soll-Lenkwinkel (ϕ_{d}) ermittelt wird, und dass aus der Abweichung des aktuellen Lenkwinkels (ϕₐ) vom Soll-Lenkwinkel (ϕ_{d}) auf ein Driften des Hinterrades (2) bzw. ein Untersteuern des Vorderrades (1) geschlossen wird.

2. Verfahren nach Anspruch 1, **dadurch gekennzeichnet, dass** ein maximaler zulässiger Driftwinkel vorgegeben wird.

3. Verfahren nach Anspruch 1 oder 2, **dadurch gekennzeichnet, dass** ein Fahrmodus für verschiedene Fahrweisen vorgegeben wird, beispielsweise für eine sportliche oder bequeme Fahrweise.

4. Verfahren nach einem der Ansprüche 1 bis 3, **dadurch gekennzeichnet, dass** das Bremsmoment am Vorderrad (1) und/oder Hinterrad (2) verändert wird.

5. Verfahren nach einem der Ansprüche 1 bis 4, **dadurch gekennzeichnet, dass** das auf das Hinterrad (2) wirkende Motormoment verändert wird.

6. Regel- bzw. Steuergerät das das Verfahren nach einem der Ansprüche 1 bis 5 durchführt.

7. Fahrerassistenzsystem in einem Zweirad mit einem Regel- bzw. Steuergerät nach Anspruch 6.

## Claims

1. Method for stabilizing a two-wheeled vehicle when cornering, in which the current riding state is detected and at least one vehicle wheel is braked or accelerated as a function of the riding state, **characterized in that** drifting of the rear wheel (2) and/or understeering of the front wheel (1) are inferred on the basis of measured values including the current steering angle (ϕₐ) and the two-wheeled vehicle is stabilized by changing the torque at the front wheel (1) and/or rear wheel (2), wherein a set point steering angle (β), is determined from the oblique position (V) which is determined from measured acceleration values, and from the vehicle velocity (v), and **in that** drifting of the rear wheel (2) and/or understeering of the front wheel (1) are inferred from the deviation of the current steering angle (ϕₐ) from the set point steering angle (ϕ_{d}).

2. Method according to Claim 1, **characterized in that** a maximum permissible drift angle is predefined.

3. Method according to Claim 1 or 2, **characterized in that** a riding mode is predefined for various riding styles, for example for a sporty riding style or comfortable riding style.

4. Method according to one of Claims 1 to 3, **characterized in that** the braking torque at the front wheel (1) and/or rear wheel (2) is changed.

5. Method according to one of Claims 1 to 4, **characterized in that** the engine torque which acts on the rear wheel (2) is changed.

6. Open-loop and/or closed-loop control device which carries out the method according to one of Claims 1 to 5.

7. Driver assistance system in a two-wheeled vehicle with an open-loop and/or closed-loop control device according to Claim 6.

## Revendications

1. Procédé de stabilisation d'un deux-roues en conduite en virage, dans lequel l'état de conduite actuelle est détecté et, en fonction de l'état de conduite, au moins une roue du véhicule est freinée ou accélérée, **caractérisé en ce qu'**à l'aide de valeurs de mesure incluant l'angle de direction actuel (ϕₐ) on déduit une dérive de la roue arrière (2) ou un sous-virage de la roue avant (1) et le deux-roues est stabilisé en modifiant le couple appliqué à la roue avant (1) et/ou à la roue arrière (2), un angle de direction de consigne (ϕ_{d}) étant déterminé à partir de la position d'inclinaison (β), qui est déterminée à partir des valeurs d'accélération mesurée, et à partir de la vitesse du véhicule (v) et **en ce qu'**à partir de l'écart de l'angle de direction actuel (ϕₐ) par rapport à l'angle de direction de consigne (ϕ_{d}), on en déduit une dérive de la roue arrière (2) ou un sous-virage de la roue avant (1).

2. Procédé selon la revendication 1, **caractérisé en ce qu'**un angle de dérive maximal admissible est prédéfini.

3. Procédé selon la revendication 1 ou 2, **caractérisé en ce qu'**un mode de conduite pour différents types de conduite est prédéfini, par exemple pour une conduite sportive ou confortable.

4. Procédé selon l'une quelconque des revendications 1 à 3, **caractérisé en ce que** le couple de freinage au niveau de la roue avant (1) et/au niveau de la roue arrière (2) est modifié.

5. Procédé selon l'une quelconque des revendications 1 à 4, **caractérisé en ce que** le couple moteur agissant sur la roue arrière (2) est modifié.

6. Appareil de réglage ou de commande, qui met en oeuvre le procédé selon l'une quelconque des revendications 1 à 5.

7. Système d'assistance à la conduite dans un deux-roues, comprenant un appareil de réglage ou de commande selon la revendication 6.
